# EUROPÄISCHE PATENTSCHRIFT

(11) **EP 0 970 435 B1**
(45) Veröffentlichungstag und Bekanntmachung des Hinweises auf die Patenterteilung: **03.12.2003**
(21) Anmeldenummer: 98921349.1
(22) Anmeldetag: 10.03.1998
(51) Int. Cl.: G06K 9/00, G07C 9/00

(54) **VERFAHREN ZUR DREIDIMENSIONALEN IDENTIFIZIERUNG VON OBJEKTEN**
METHOD FOR THREE-DIMENSIONAL OBJECT IDENTIFICATION
PROCEDE D'IDENTIFICATION TRIDIMENSIONNELLE D'OBJETS

(30) Priorität: 26.03.1997 DE 19712844
(43) Veröffentlichungstag der Anmeldung: 12.01.2000
(73) Patentinhaber: SIEMENS AKTIENGESELLSCHAFT, 80333 München (DE)
(72) Erfinder: DOEMENS, Günter, D-83607 Holzkirchen (DE); RUMMEL, Peter, D-83703 Gmund (DE); SCHNEIDER, Richard, D-82024 Taufkirchen (DE)
(86) Internationale Anmeldenummer: DE9800707
(87) Internationale Veröffentlichungsnummer: WO98043216

(56) Entgegenhaltungen:
- EP-A- 0 662 773
- DE-A- 19 633 686
- US-A- 4 294 544
- US-A- 5 424 868
- US-A- 5 592 188
- TORU ABE ET AL: "AUTOMATIC IDENTIFICATION OF HUMAN FACES BY 3-D SHAPE OF SURFACES-USING VERTICES OF B-SPLINE SURFACE" SYSTEMS & COMPUTERS IN JAPAN, Bd. 22, Nr. 7, 1. Januar 1991, Seiten 96-104, XP000259345
- P BARYSCH: "MIKROSPIEGEL IN DER GROSSBILDPROJEKTION" FUNKSCHAU, Bd. 67, Nr. 19, 1. September 1995, Seite 34/35 XP000530294

## Beschreibung

Die Erfindung betrifft ein Verfahren zur schnellen dreidimensionalen Identifizierung von Objekten, insbesondere zur Gesichtsidentifizierung. Solche Verfahren können bei der Prüfung einer Zugangsberechtigung für bestimmte Räume oder Gebäude bzw. für eine Zugriffsberechtigung für bestimmte Automaten eingesetzt werden.

In Verbindung mit der Zugriffsberechtigung zu bestimmten Dingen, wie beispielsweise Geldautomaten besteht zunehmender Bedarf an äußerst sicheren Überwachungssystemen. Dabei wird jeweils eine Mehrzahl von personenspezifischen Merkmalen geprüft. Eine wesentliche Rolle kommt darin der Erkennung des Gesichtes zu.

Heute befinden sich bereits verschiedene Sicherungssysteme in der Felderprobung. Hier ist beispielsweise die Scheck- oder Chipkarte zu nennen, auf der mehrere Merkmale des Gesichtes des Inhabers gespeichert werden können. Ein Benutzer erhält nur Zugang bzw. Zugriff, wenn beispielsweise eine Codierungsnummer sowie vom Automaten erkannte Gesichtsmerkmale mit gespeicherten Daten übereinstimmen. Die Codierungsnummer ist beispielsweise die PIN (Personal Identification Number). Die Gesichtsmerkmale werden aus einem von einer Fernsehkamera aufgenommenen Grauwertbild extrahiert. Dabei handelt es sich im wesentlichen um einfache geometrische Kenngrößen in einer Ebene, wie beispielsweise der Augenabstand, der Abstand zwischen Mund und Augenachse usw.. Trotz des relativ unbestimmten Zusammenhangs zwischen einem zweidimensionalen Grauwertbild und der eigentlichen Gesichtsform die in ihrem Wesen deutlich dreidimensional ausgeprägt ist, können mit bekannten Auswerteverfahren wie beispielsweise mit neuronalen Netzen schon sehr gute Ergebnisse erzielt werden. Die Erkennungssicherheit liegt bislang bei ca. 98%. TORU ABE ET AL: 'AUTOMATIC IDENTIFICATION OF HUMAN FACES BY 3-D SHAPE OF SURFACES-USING VERTICES OF B-SPLINE SURFACE' SYSTEMS & COMPUTERS IN JAPAN, Bd. 22, Nr. 7, 1. Januar 1991, Seiten 96-104, XP000259345 beschreiben ein System zur Erkennung von menschlichen Gesichtern. Ein wesentlicher Nachteil der bisherigen Verfahren ist, daß diese relativ leicht getäuscht werden können, wie beispielsweise durch eine vor das Gesicht gehaltene Fotografie.

Es ist bekannt für die dreidimensionale Objekterkennung das Prinzip des codierten Lichtansatzes in Verbindung mit Triangulation zu verwenden. Das wesentliche Merkmal dieses Meßprinzips liegt in der raum-zeitlichen Codierung des zu vermessenden Arbeitsraumes, der Objektoberfläche. Der Arbeitsraum wird durch eine zeitlich aufeinanderfolgende Projektion beispielsweise von Streifenmustern beleuchtet(Gray-codierte-Streifenmuster). Die Streifenmuster ermöglichen dabei die Unterscheidung von unterschiedlichen Projektionsrichtungen, die durch eine charakteristische Hell-Dunkel-Sequenz gekennzeichnet sind. Zur dreidimensionalen Vermessung einer Objektszene werden die mit Hilfe eines transparanten LCDs (Liquid Cristall Device) erzeugten und an den Objekten der Szene deformierten Muster von einer Kamera aus einer anderen, als der Beleuchtungsrichtung beobachtet.

Bei bekannter Position zwischen Kamera, Projektor und Objektszene können die dreidimensionalen Koordinaten der beobachteten Szene auf konventionelle Weise durch Triangulation berechnet werden.

Die bisher bekannte Verwendung von trannsparenten LCDs als lichtmodulierende wahlweise transparente Elemente ist mit einer relativ langen Erfassungszeit verbunden, da die LCDs sehr lange Schaltzeiten aufweisen. Für eine schnelle Erfassung (z.B. 0,1 Sekunden für eine Personenidentifizierung) ist dieser Ansatz ungeeignet.

Ein schnell schaltbares Lichtmodulationselement, das zudem vielfältig ansteuerbar ist, ist aus der folgend genannten Firmenschrift von Texas-Instruments bekannt: "Larry J.Hornbeck, Digital Light Processing And MEMs: Timely Convergence For A Bright Future, Texas Instruments Ddigital Imaging Components, Dallas/Texas 75265, 23. bis 24. Okt. 1995", Austin,Texas,USA.
Eine darin beschriebene digitale Mikrospiegelanordnung (DMD, Digital Micromirror Device) kann eine digitale Lichtbearbeitung (DLP, Digital Light Processing) vollführen. Dieses lichtmodulierende Element besteht aus einer Vielzahl von auf einer integrierten Schaltung (Chip) mikromechanisch aufgebrachten Spiegeln, die einzeln oder in Gruppen ansteuerbar sind. Die Anzahl der Spiegel kann bis zu 480.000 pro Chip betragen. Normalerweise kann ein DMD-Chip mit einem 8-Bit-Wort angesteuert werden, wodurch sich 256 Grauwertstufen ergeben. Nachdem dieses lichtmodulierende Element zunächst für Fernseh- bzw. Videoanwendungen eingesetzt wird, sind weitere Daten entsprechend an fernsehtechnische Einrichtungen angelehnt. Ein wesentliches Merkmal besteht jedoch darin, daß die Schaltzeiten im Bereich von Mikrosekunden liegen. Damit wird die Wiedergabe eines Fernsehbildes durch Verwendung einer beispielsweise dreifarbigen Beleuchtung des Chips ermöglicht, wobei der DMD-Chip entsprechend elektronisch angesteuert wird. Das durch die Vielzahl von entsprechend angesteuerten Spiegeln dargestellte Bild kann auf eine Leinwand projiziert werden. Ein optisches Element der beschriebenen Art kann somit eine hohe Auflösung und einen sehr guten Kontrast erzeugen.

Der Erfindung liegt die Aufgabe zugrunde, die Topografie dreidimensionaler Objekte durch codierte Beleuchtung und mit Fernsehbildverarbeitung wesentlich schneller zu erfassen, ohne dabei die Systemkosten wesentlich zu erhöhen.

Die Lösung dieser Aufgabe geschieht durch die Merkmale des Anspruchs 1.

Vorteilhafte Ausgestaltungen können den Unteransprüchen entnormen werden.

Erfindungsgemäß kann bei der Gesichtsidentifizierung neben der Auswertung der zweidimensionalen Bilder noch die Auswertung dreidimensionaler Gesichtsformen herangezogen werden, die wesentlich umfangreichere und sichere Informationen enthält. Die daraus resultierenden Vorteile liegen in einer um Faktoren höheren Erkennungssicherheit, wodurch eine erheblich größere Anzahl von Personen unterscheidbar ist.
Als Merkmale zur Erkennung einer dreidimensionalen Oberfläche können dann Konturen oder Schnitte in unterschiedlichen Ebenen herangezogen werden. Eine Grundvoraussetzung für eine schnelle Erkennung mit sehr hoher Erkennungssicherheit ist die vollständige und korrekte Erfassung der Oberflächen-Topografie. Als ein Verfahren bietet sich die Triangulation in Verbindung mit einer codierten Beleuchtung an. Bei der bekannten Gray-Code Beleuchtung wird ein Streifenmuster auf das Objekt projiziert, dessen Periodizität variiert wird. Es werden beispielsweise die Linienzahlen verdoppelt. Bei n verschiedenen Periodizitäten, die in n-Bildern aufgenommen werden, erhält man bei diesem Verfahren 2" Tiefenebenen. Für 64 Tiefenebenen werden demnach mindestens sechs verschiedene kodierte Bilder benötigt. Dieses Verfahren benötigt eine schnelle Umschaltung der Beleuchtungsbilder, da der Erkennungsvorgang bei einer realen Gesichtsaufnahme in sehr kurzer Zeit abgeschlossen sein muß, weil eine Person in der Regel nicht lange still steht. Die derzeit hier zur Verfügung stehenden Flüssigkristallmodulatoren bedingen für die Informationsaufnahme zur dreidimensionalen Erfassung einen Zeitraum von etwa 0,1 Sekunden. Neue Möglichkeiten eröffnen sich bei diesem Ansatz durch die Substitution des Flüssigkristallmodulators. Dies wird erfindungsgemäß durch einen Mikrospiegel-Modulator (DMD, Digitalmikromirror Device, DMD-Mikrochip) erreicht. Dieses Element, das aus einer Vielzahl von schaltbaren Mikrospiegeln besteht, die einzeln ansteuerbar sind, ist in der Lage eine kodierte Beleuchtung auf eine dreidimensionale Oberfläche aufzubringen, wobei verschiedene Beleuchtungsmuster mit hoher Auflösung und hohem Kontrast erzeugt werden können. Dies kann darüber hinaus mit ausreichend hoher Schaltfrequenz geschehen, so daß für Lichtkodierungsverfahren mehrere Bilder in kurzer Zeit sequentiell erfaßt werden können.

Darüber hinaus wird durch die Erfindung auch der problemlose Einsatz einer codierten Beleuchtung mit verschiedenen Farben ermöglicht, so daß bereits mit einem Fernsehhalbbild gleichzeitig drei Tiefenebenen erfaßt werden können. Dabei wird die Auswertung der drei Farbkanäle rot, grün und blau einer Farbkamera benutzt.

Die Kombination von codierter Beleuchtung, dem digitalen Mikromirror-System, sowie der Farbbildverarbeitung liefert für die Erkennung von dreidimensionalen Objekten, beispielsweise der Erkennung eines Gesichtes, in idealer Weise die schnelle Erfassung und hohe Erkennungssicherheit. Ein Gesichtsidentifizierungssystem dieser Art kann aus kostengünstigen Komponenten der Konsumerelektronik realisiert werden.

Die Erfindung ermöglicht die Einführung von unmittelbar erfaßten dreidimensionalen Daten des menschlichen Gesichtes zur Personenidentifizierung. Es wird allgemein ein Verfahren zur schnellen, hochauflösenden und kostengünstigen Erfassung der dreidimensionalen Daten eines menschlichen Gesichtes zur Verfügung gestellt, wobei die Kombination einer codierten Beleuchtung mit einem digitalen Mikrospiegelelement eingesetzt wird. Die Farbbildverarbeitung kann optional hinzukommen und reduziert die Erfassungszeit auf ein Drittel.

Im folgenden werden anhand von schematischen Figuren Ausführungsbeispiele beschrieben.
Figur 1 zeigt eine schematische Anordnung von Bauteilen zur dreidimensionalen Gesichtserkennung mit digitaler Licht- und Farbbildverarbeitung,
Figur 2 zeigt Beispiele für die dreidimensionale Gesichtserkennung anhand von geometrischen Daten.

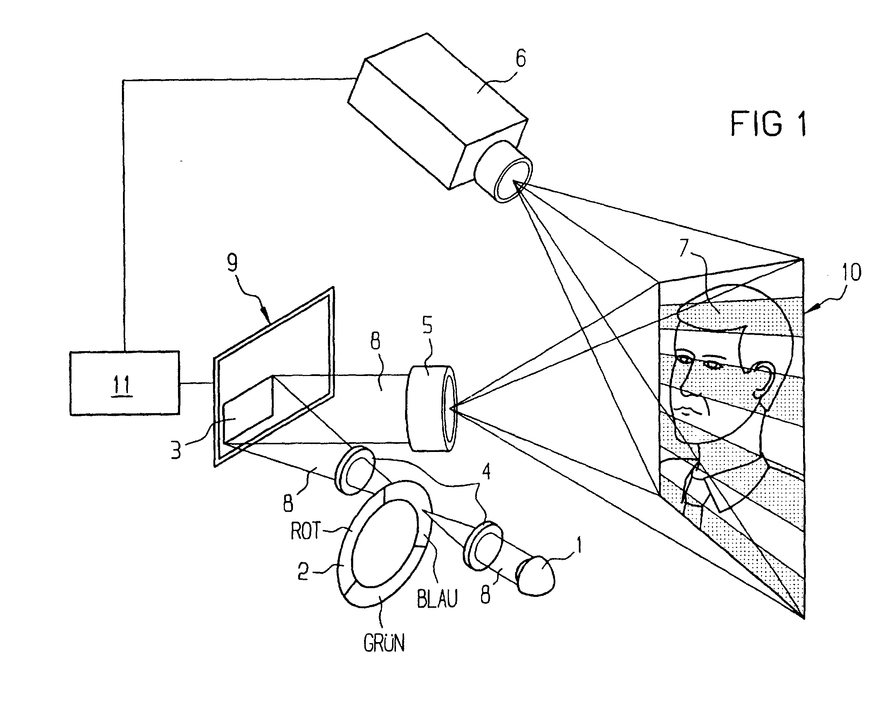

In der Figur 1 ist in der rechten Bildhälfte eine Objektoberfläche 7 zu erkennen. Theoretisch könnte durch die digitale Mikrospiegelanordnung 3, die mittels der Lichtquelle 1 beleuchtet wird, an der Stelle der Objekte 7 ein beliebiges Bild erzeugt werden. Im Sinne der Erfindung liegt jedoch hier eine Objekt 7 vor, das mittels codierter Beleuchtung entsprechend angestrahlt wird, so daß eine Codierung 10 auf dem Objekt 7 erscheint. Der von der Lichtquelle 1 ausgehende Strahlengang wird über jeweils eine Optik 4 vor und hinter einem Farbfilter 2 geeignet ausgebildet. Der Farbfilter 2 besteht aus einer rotierenden Scheibe, die am Umfang einen farbigen lichtdurchlässigen Streifen aufweist, der gleichmäßig in einen roten, grünen und blauen Bereich unterteilt ist. Somit wird eine Farbbildverarbeitung ermöglicht. Die digitale Lichtbearbeitung 9 besteht aus einer digitalen Mikrospiegelanordnungen 3. Diese Anordnung 3 ist ein sog. DMD-Chips (Digitale Mikrospiegelanordnung, Digital-Mikromirror-Device). Mittels der Steuer- und Auswerteeinheit 11 wird neben der Lichtbearbeitung 9 die Kamera 6 gesteuert. Die Projektion des Lichtes erfolgt hinter der digitalen Mikrospiegel-Anordnung 3 durch die Projektionslinse 5 auf die Objektoberfläche 7. Dabei ist durch die digitale Mikrospiegelanordnung 3 die entsprechende Lichtcodierung aufgebracht worden. Für eine Farbbildauswertung muß die Kamera 6 eine Farbbildkamera sein.

Bei der Farbbildauswertung wird zunächst über den Digital-Mirror-Device eine codierte Beleuchtung derart auf das Objekt 7 projiziert, dass in einem Fernsehhalbbild drei Streifenmuster mit jeweils unterschiedlicher Farbe ( z.B. rot, grün, blau) und Periodizität gleichzeitig vorliegen. +Durch die getrennte und paralelle Aufnahme der drei unterschiedlichen. Farbmuster können somit in einem Fernsehhalbbild die Informationen zur Berechnung von drei Tiefenebenen erfaßt werden.

Um beispielsweise die Auswertung einer Gesichtsoberfläche innerhalb von 0,1 Sekunden mit sehr hoher Erkennungssicherheit zu gewährleisten, wird dieses Gesicht mit einer codierten in diesem Fall streifenartigen Codierung beleuchtet, wobei die Streifen in aufeinanderfolgenden Bildern verschiedene Periodizitäten aufweisen. Das Gesicht wird dabei beispielsweise durch 200 x 200 x 150 Bildpunkte mit einer räumlichen Auflösung von 2 x 2 x 2 mm erfaßt. Das zugrundeliegende Prinzip der Höhenmessung an dem Objekt 7 ist beispielsweise die Triangulation. Mit dem Einsatz einer digitalen Mikrospiegelanordnung 3 wird das bisherige Problem einer schnellen Umschaltung der Beleuchtungsbilder für die streifenförmgie Kodierung 10, gelöst. Somit kann der Zeitraum für die vollständige und sichere Erfassung eines Objektes 7, wie beispielsweise ein Gesicht in ca. 0,1 Sekunden geschehen. Bisher war hierzu ca. 1 Sekunde notwendig.

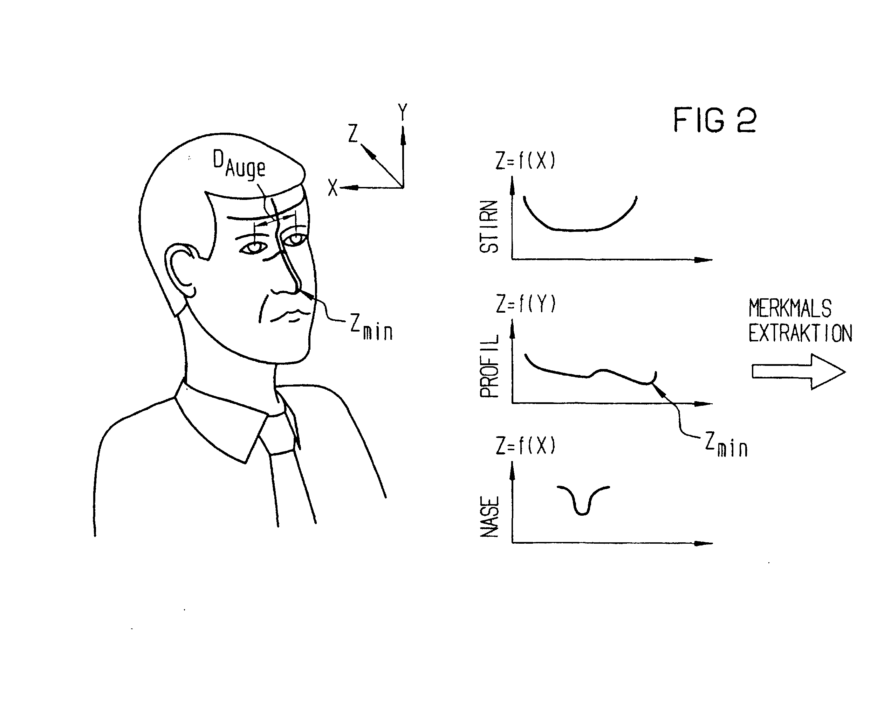

In Figur 2 sind beispielhaft drei Karakteristika eines Gesichtes dargestellt, die entweder für sich kennzeichnend für das Gesicht sind oder aus denen noch detailliertere Merkmale abgeleitet werden. Anhand dieser und ähnlicher Erkennungsmerkmale können Gesichter mit höherer Zuverlässigkeit unterschieden werden, als mit den derzeit eingesetzten zweidimensionalen Verfahren.

In Figur 2 sind anhand der räumlichen Koordinaten x, y und z drei Möglichkeiten von Definitionen bestimmter Karakteristika eines Gesichtes dargestellt. Im oberen Diagramm ist eine Linie bzw. Kontur des Gesichtes im Stirnbereich in einer senkrecht zur y-Achse liegenden Ebene wiedergegeben. Gleiches gilt für das untere Diagramm in Figur 2, wobei hier der Nasenbereich betroffen ist. Das mittlere der drei Diagramme in Figur 2 stellt eine Linie dar, die sich in einer Ebene, senkrecht zur x-Achse befindet. Hier wird demnach ein seitliches Profil des Gesichtes wiedergegeben. Die Marke *Z*ₘᵢₙ gibt dabei beispielsweise die Position der Nasenspitze relativ zu dem Gesichtsprofil an.

## Patentansprüche

1. Verfahren zur dreidimensionalen Identifizierung von Objekten (7), bei dem
- eine digitale Mikrospiegel-Anordnung (3) von einer Lichtquelle (1) beleuchtet wird,
- die digitale Mikrospiegel-Anordnung (3) derart angesteuert wird, daß mehrere codierte Beleuchtungsmuster aufeinanderfolgend auf die Objektoberfläche (7) projiziert werden, und mittels eines veränderbaren Farbfilters im Strahlengang (8) das Objekt sequentiell mit mindestens drei unterschiedlichen Farben beleuchtet wird und somit mindestens drei Tiefenebenen in einem einzigen Bild bestimmbar sind,
- das derart beleuchtete Objekt (7) mittels einer Farbkamera (6) aus einer anderen als der Beleuchtungsrichtung aufgenommen wird und daraus die Topographie des Objektes (7) mit großer Genauigkeit in einer Steuer-und Auswerteeinheit (11) berechnet wird.

2. Verfahren nach einem der vorhergehenden Ansprüche, bei dem die Codierung aus einem Streifenmuster besteht, dessen Periodizität aufeinanderfolgend variiert wird.

3. Verfahren nach einem der vorhergehenden Ansprüche, welches zur Gesichtsidentifizierung benutzt wird.

## Claims

1. Method for the three-dimensional identification of objects (7), in which
- a digital micro-mirror arrangement (3) is illuminated by a light source (1),
- the digital micro-mirror arrangement (3) is driven in such a way that a plurality of encoded illumination patterns are projected successively onto the object surface (7) and, by means of a variable colour filter in the beam path (8), the object is illuminated sequentially with at least three different colours and thus at least three depth planes can be determined in a single image,
- the object (7) illuminated in this way is recorded by means of a colour camera (6) from a direction other than the illumination direction and, from this, the topography of the object (7) is calculated with great accuracy in a control and evaluation unit (11).

2. Method according to the preceding claim in which the encoding comprises a strip pattern whose periodicity is varied successively.

3. Method according to one of the preceding claims which is used for identifying faces.

## Revendications

1. Procédé d'identification tridimensionnelle d'objets (7), dans lequel
- un dispositif à micro-miroirs numérique (3) est éclairé par une source de lumière (1 );
- ledit dispositif à micro-miroirs numérique (3) est commandé de manière telle que plusieurs dessins d'éclairage codés sont projetés successivement sur la surface de l'objet (7) et l'objet est éclairé séquentiellement avec au moins trois couleurs différentes au moyen d'un filtre couleurs variable dans la marche des rayons (8), au moins trois plans de profondeur pouvant ainsi être déterminés dans une seule image;
- l'objet ainsi éclairé (7) est photographié par une caméra couleur (6) depuis une direction autre que la direction de l'éclairage et la topographie de l'objet (7) est calculée, sur cette base, avec une grande précision dans une unité de commande et d'analyse (11).

2. Procédé selon l'une des revendications précédentes, dans lequel le codage se compose d'un dessin à barres dont la périodicité varie successivement.

3. Procédé selon l'une des revendications précédentes, lequel est utilisé pour l'identification de visages.
